# EUROPÄISCHE PATENTSCHRIFT

(11) **EP 0 682 318 B1**
(45) Veröffentlichungstag und Bekanntmachung des Hinweises auf die Patenterteilung: **09.08.2000**
(21) Anmeldenummer: 94107310.8
(22) Anmeldetag: 10.05.1994
(51) Int. Cl.: G06F 17/30

(54) **Datenverwaltungssystem**
Database management system
Système de gestion de base de données

(43) Veröffentlichungstag der Anmeldung: 15.11.1995
(73) Patentinhaber: SIEMENS AKTIENGESELLSCHAFT, 80333 München (DE)
(72) Erfinder: Bauer, Astrid M. K., D-85221 Dachau (DE); Mohr, Günther, Dipl.-Ing., D-82140 Olching (DE); Siegwart, Bernd, Dipl.-Phys., D-86833 Ettringen (DE)

(56) Entgegenhaltungen:
- EP-A- 0 420 419
- EP-A- 0 425 222
- EP-A- 0 525 946

## Beschreibung

In einem Realzeitsystem, insbesondere einem Vermittlungssystem, müssen großen Mengen von Daten verwaltet werden, die z.T. in komplexer Beziehung untereinander stehen. Zugriffe auf diese Daten müssen in Echtzeit, d.h. möglichst schnell und sicher (konsistent) durchgeführt werden.

Bei bisher bekannten Vermittlungssystemen sind die verschiedenen Anwendersysteme selbst verantwortlich für die Datenmodule, Adressierungsarten und Zugriffsprozeduren. Dies führt zu je Anwendersystem individuellen Ausprägungen bei der Implementierung gleichartiger Funktionen. Außerdem erschwert die fehlende einheitliche Struktur den Überblick und die Unterstützung externer objektorientierter Zugriffe (CMISE).

Die Datenkonsistenz wird bisher ebenfalls auf Anwenderebene sichergestellt. Dies hat eine grobe Granularität bezüglich der Zugriffskontrolle zur Folge. Des weiteren schränken die Methoden zur Konsistenzsichrung die Systemverfügbarkeit ein. Außerdem wird die Konsistenzsicheruung durch die Möglichkeit des direkten Datenzugriffs erschwert. Zugriffskonflikte sind dadurch beispielsweise nur schwer erkennbar.

Der Erfindung liegt die Aufgabe zugrunde, ein Datenverwaltungssystem anzugeben, das Zugriffe eines Anwenders auf dessen Anwenderdaten selbständig steuert und gegenüber anwenderindividuellen Ausprägungen der Anwenderdaten flexibel ist.

Diese Aufgabe wird durch die Merkmale des Anspruchs 1 gelöst.

Durch das (zentrale und lokale) Zugriffssteuerungssystem wird ein Anwendersystem des Datenverwaltungssystems von Zugriffssteuerungsaufgaben (z.B. Steuerung der Datenkonsistenz bei Zugriffsequenzen, Steuerung von Zugriffskonflikten bei parallelen Zugriffen mehrerer Anwender) entlastet und dadurch dessen Verfügbarkeit entsprechend erhöht.

Durch die ausschließliche Kommunikation des Anwenders mit dem Datenverwaltungssystem über Zugriffsprozeduren, die vom Datenverwaltungssystem exportiert werden, ist eine gute Datenkapselung gegenüber dem Anwender gewährleistet. Dadurch sind Zugriffskonflikte leichter erkennbar, die ebenfalls vom Zugriffssteuerungssystem behandelt werden.

Schließlich wird der Anwender durch den indirekten Datenzugriff weitgehendst von Datenverwaltungsfunktionen befreit.

Durch das Instanziieren der generischen Module, d.h. durch das Aufprägen von anwenderspezifischen Datentypen und Parametern wird es ermöglicht aus den generischen Modulen auf einfache Weise anwendungsspezifische Datenmodule (Anwendermodule) zu erzeugen, die bzgl. der komplexen Funktionalität (z.B. bzgl. Datenkonsistenzsicherung) garantiert fehlerfrei arbeiten, da durch die Instanziierung automatisch die gesamte Funktionalität des zugrungeliegenden generischen Moduls mitübernommen wird.

Da gleichartige Funktionen verschiedener Anwendermodule somit nur noch ein einziges Mal, nämlich im gemeinsamen generischen Modul, implementiert werden (generische Funktionen) müssen, ist der Implementierungs-, Test-, und Wartungsaufwand jeweils auf das generische Modul beschränkt.

Darüberhinaus werden durch die einheitlichen Strukturen der generischen Module externe objektorientierte Zugriffe (CMISE) erleichtert.

Eine Ausführungsform der Erfindung ist in Anspruch 2 angegeben. Durch die Einführung von Anwenderzugriffsprozeduren, die aus Standardzugriffsprozeduren aufgebaut sind, wird die Unabhängigkeit der jeweiligen Anwendung von den logischen Datenstrukturen der Anwendung erreicht.

In einer Anwendungszugriffsprozedur(View) wird ein Zugriff auf eine oder mehrere Objektklassen durchgeführt. Eine Objektklasse wird in einem Anwendermodul verwaltet. Eine Anwendungszugriffsprozedur enthält als Parameter die gewünschten Attribute der von dem Zugriff betroffenen Objektklassen, wobei es sich bei diesen Parametern um Rückgabeparameter handelt, die der Applikation nach Ausführung der Anwenderzugriffsprozedur zurückgegeben werden. Durch die Anwenderzugriffsprozedur wird der Anwendung somit eine eigene Sichtweise auf die gespeicherten Anwendungsdaten bereitgestellt. Änderungen der logischen Datenstrukturen haben somit keine Auswirkungen auf die Anwendungen.

Im folgenden wird ein Ausführungsbeispiel der Erfindung anhand der Zeichnung naher erläutert.

In der Zeichnung repräsentieren die Pfeile zwischen den Blöcken eine funktionale Beziehung (z.B. einen Prozeduraufruf, wobei der Kopf eines Pfeils auf die aufgerufene Prozedur zeigt).

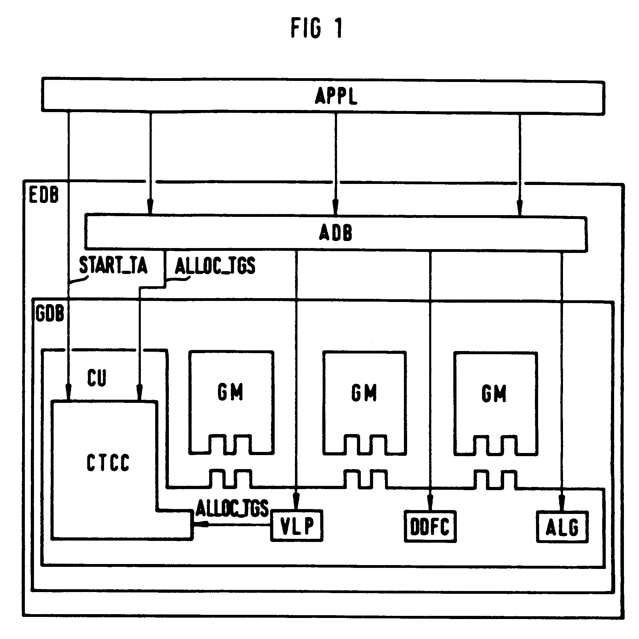

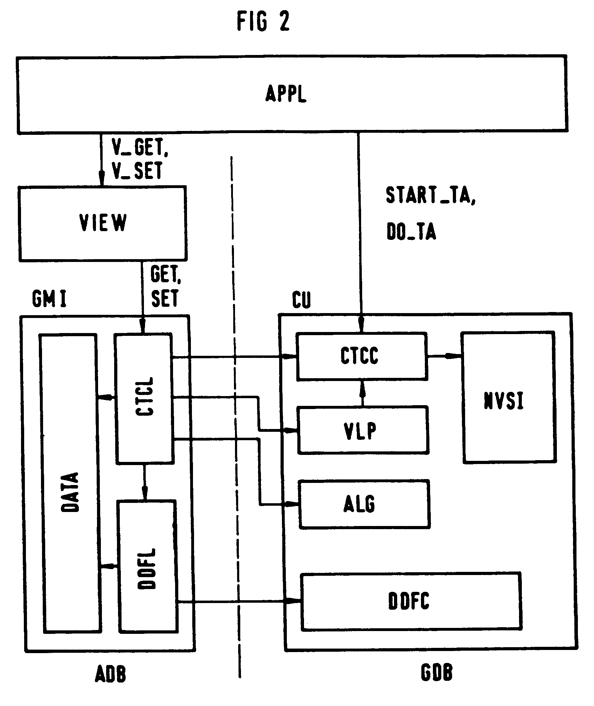

Fig. 1 und Fig. 2 zeigen die Struktur des erfindungsgemäßen Datenverwaltungssystems EDB, auf das verschiedene Anwendungen APPL zugreifen können.

Das Datenverwaltungssystem besteht aus zwei Schichten, nämlich einer anwendungsspezifischen Systemschicht, die im folgenden als applikationsspezifische Datenbasis ADB bezeichnet wird, und einer anwendungsunabhängigen Systemschicht, die im folgenden als generische Datenbasis GDB bezeichnet wird.

Die generische Datenbasis GDB umfaßt zentrale und lokale Funktionen, wobei die zentralen Funktionen in einem zentralen Steuerungssystem CU und die lokalen Funktionen in generischen Modulen GM realisiert sind.

Das zentrale Steuerungssystem CU enthalt ein zentrales Zugriffssteuerungssystem CTCC, das Zugriffe (Einzelzugriffe oder Zugriffsequenzen) zentral steuert, allgemeine Zugriffsalgorithmen ALG, ein Sicherungssystem NVSI, das den Zugang zu einem Hintergrundspeicher zur Sicherung der Anwenderdaten realisiert, und ein zentrales Verteilungssystem DDFC, das der Verteilung von aktualisierten Anwenderdaten auf die verschiedenen Prozessoren des Realzeitsystems dient. Optional kann noch ein Datenpool VLP zur Verwaltung von Daten mit variabler Lange hinzugefügt werden, ohne bestehende Funktionen zu beeinflussen.

Ein generisches Modul GM stellt ein Definitions-Modul (Schablone) zur Beschreibung eines Daten-Containers dar, der Datenstrukturen zum Speichern der Anwenderdaten sowie die dazu benötigten Zugriffsstrukturen, d.h. Adressierungsverfahren und elementare Zugriffsprozeduren, enthält. Darüberhinaus enthalten die generischen Module zusätzliche Strukturen zur Unterstützung des zentralen Funktionensystems, d.h. Strukturen zur Unterstützung der Koordination und Konsistenzsicherung (lokales Zugriffssteuerungssystems CTCL), sowie Strukturen zur Unterstützung der Verteilung der Anwenderdaten auf verschiedene Plattformen (lokales Datenverteilungssystem DDFL). Die Beschreibung der genannten Strukturen im generischen Modul erfolgt dabei in einer vom Anwender unabhängigen Weise, d.h. in einer vom Daten-Layout der Datenstrukturen unabhängigen Weise.

Unterschiedliche Typen von generischen Modulen werden durch Kombination von Bausteinen (z.B. lokales Zugriffssteuerungssystem CTCL, lokales Verteilungssystem DDFL sowie hierzu notwendige zusätzliche Datendefinitionen, verschiedene Adressierungsverfahren) erzeugt. Die Varianten werden durch die Anforderungen bestimmt, die sich aus der Datenmodellierung der entsprechenden Anwendung ergeben.

Jedes generische Modul enthalt einen Satz von elementaren Zugriffsprozeduren, die die Steuerung eines Einzelzugriffs betreffen. Dieser Satz umfaßt eine Prozedur GET zum Lesen eines Datenelementes (Attributes), eine Prozedur SET zum Modifizieren eines Datenelementes, sowie Prozeduren CREATE und DELETE zum Erzeugen bzw. Löschen von Datenelementen des Anwenders. Ein Zugriff auf die Daten eines Anwenders ist nur über diese speziellen Zugriffsprozeduren möglich (Datenkapselung). Daten mit entsprechender Persistenzanforderung werden im Core-Image-Format auf einem Hintergrundspeicher gesichert. Dadurch wird gewährleistet, daß nach einem Wiederanlauf des Vermittlungsrechners mit zugehörigem Ladevorgang die aktuellen Daten schnellstmöglich zur Verfügung stehen.

Die applikationsspezifische Datenbasis ADB umfaßt Views und Modulinstanzen, wobei die Modulinstanzen durch Instantiierung aus den generischen Modulen erzeugt werden. Durch das Instanziieren werden dem generischen Modul anwenderspezifische Datentypen und Parameter aufgeprägt. Eine Modulinstanz wird deshalb im folgenden auch als anwenderspezifisches Datenmodul oder als Anwendermodul bezeichnet

Die Views bilden die Schnittstelle zu der aktuellen Anwendung APPL. Sie repräsentieren damit das logische Bild des konzeptionellen Datenmodells dieser Anwendung.

Das Zugriffssteuerungssystem steuert den Zugriff von Anwendern auf das Datenverwaltungssystem EDB und stellt dabei sicher, daß ein Aktualisierungsvorgang das Datenverwaltungssystem von einem konsistenten Ausgangszustand in einen konsistenten Endzustand überführt. Um diese Konsistenz sicherzustellen, behandelt das Zugriffssteuerungssystem Zugriffssequenzen (Transaktionen oder Lesesequenzen) in einer ganzheitlichen (atomaren) Weise, d.h. eine Transaktion wird bspw. entweder ganzheitlich durchgeführt oder ganzheitlich zurückgewiesen.

Darüberhinaus koordiniert das Zugriffssteuerungssystem den gleichzeitigen Zugriff von zueinander parallelen Zugriffssequenzen.

Das Zugriffssteuerungssystem umfaßt das CTCC, welches für den Anwender solche Steuerungsaufträge (z.B. START_TA, DO_TA, ABORT_TA) durchführt, die die Steuerung einer Zugriffssequenz in ihrer Gesamtheit betreffen.

Der zentrale Datenpool VLP verwaltet semipermanente und transiente Daten von variabler Länge. Er beinhaltet sowohl die Daten als auch einen Satz von Primitiven, um die von ihm beherbergten Daten abzuspeichern und zu manipulieren.

Alle vom zentralen Datenpool verwalteten Daten werden durch den Datenpool eingekapselt. Alle Zugriffe auf diese Daten können also nur über die genannten Primitiven erfolgen. Die genannten Modulinstanzen können vom Datenpool einen Block beliebiger Länge reservieren lassen, wobei jeder reservierte Datenblock durch einen bei seiner Reservierung zugeordneten logischen Schlüssel identifiziert wird.

Die generischen Zugriffsalgorithmen ALG umfassen Funktionen, die allen generischen Modulen gemeinsam sind, nämlich zum einen Algorithmen zur logischen Organisation der Datenhaltung (z.B. linked list, binary tree), zum anderen Mechanismen zur physikalischen Speicherung der Daten, d.h. datenstrukturunabhängige Wege durch datenbasisinterne Verwaltungs- bzw. Zugriffsstrukturen. Die generischen Zugriffsalgorithmen werden ausschließlich von den generischen Modulen aufgerufen.

Das DDFC steuert den Transfer von Anwenderdaten von einer Plattform (Prozessor) zu anderen Plattformen (Prozessoren) und gewährleistet dabei die Datenkonsistenz zwischen verschiedenen Plattformen (Prozessoren). Das DDFC wird von einem DDFL eines GMI dynamisch aufgerufen.

Ein generisches Modul dient, wie bereits erwähnt, als Schablone für einen Daten-Container, der eine spezifische Datenstruktur (z.B. eine sortierte Liste, einen binären Baum) sowie für diese Datenstruktur spezifische Zugriffsalgorithmen in einer anwendungsunabhängigen Weise beschreibt, d.h. in einer vom Daten-Layout unabhängigen Art und Weise. Ein generisches Modul umfaßt einen Satz von elementaren Zugriffsprozeduren zum Datenverwaltungssystem, die es der jeweiligen Anwendung zur Verfügung stellt, um dadurch einen lesenden oder schreibenden Zugriff zu den in der generischen Datenbasis GDB enthaltenen Daten zu realisieren.

Aufgrund der internen Architektur eines generischen Moduls, die zwischen Datenstruktur-spezifischen Teilen und allgemeinen Teilen des Datenzugriffs und der Datenbehandlung unterscheidet, können allgemeine Funktionen als generische Algorithmen ALG deklariert werden, die von jedem generischen Modul benutzt werden können, da sie in dem Zentralmodul CM der generischen Datenbasis enthalten sind. Darüberhinaus benützen die generischen Module andere allgemeine Funktionen, die vom zentralen Zugriffssteuerungssystem CTCC und dem Datenpool VLP zur Verfügung gestellt werden.

Ein Hauptzweck, der mit der Einführung von generischen Modulen verfolgt wird ist die Wiederverwendbarkeit und Wiederersetzbarkeit von Software. Die generischen Module bilden eine Bibliothek (Library), aus der anwendungsspezifische Datenmodule durch Instantiierung erzeugt werden können, d.h. durch das Ersetzen von allgemeinen Datenlayout-Informationen (Platzhaltern, in CHILL z.B. ANY_ASSIGN) durch spezifische Layout-Informationen.

Durch die Einfügung der Anwendungsprozedurschicht VIEW zwischen Anwendung und Anwendermodul erreicht man die Unabhängigkeit der jeweiligen Anwendung von den logischen Datenstrukturen. Mit Hilfe einer Anwenderzugriffsprozedur wird ein Zugriff auf eine oder mehrere Objektklassen durchgeführt, wobei ein Anwendermodul jeweils eine Objektklasse verwaltet. Eine Anwenderzugriffsprozedur enthält als Parameter die gewünschten Attribute der von dem Zugriff betroffenen Objektklassen, wobei es sich bei diesen Parametern um Rückgabeparameter handelt, die der Applikation nach Ausführung der Anwenderprozedur zurückgegeben werden. Durch die Anwenderzugriffsprozedur wird der Anwendung somit eine eigene Sichtweise auf die gespeicherten Anwendungsdaten bereitgestellt. Änderungen der logischen Datenstrukturen haben somit keine Auswirkungen auf die Anwendungen.

Eine Anwendung bzw. ein Anwender verwendet zur Verwaltung seiner Anwenderdaten ausschließlich die Anwenderzugriffsprozeduren VIEW. Für die konsistente Änderung abhängiger Daten wird eine entsprechende Folge von Anwenderprozeduraufrufen durch Befehle an das zentrale Zugriffssteuerungssystem als Transaktion gekennzeichnet. Die Durchführung der Transaktion sowie die Sicherung der Daten auf dem Hintergrundspeicher und die Verteilung der Daten erfolgt in eigenständiger Weise durch das Datenverwaltungssystem und ist somit vollständig unsichtbar für den Anwender.

Im folgenden wird der Ablauf einer Transaktion naher erläutert.

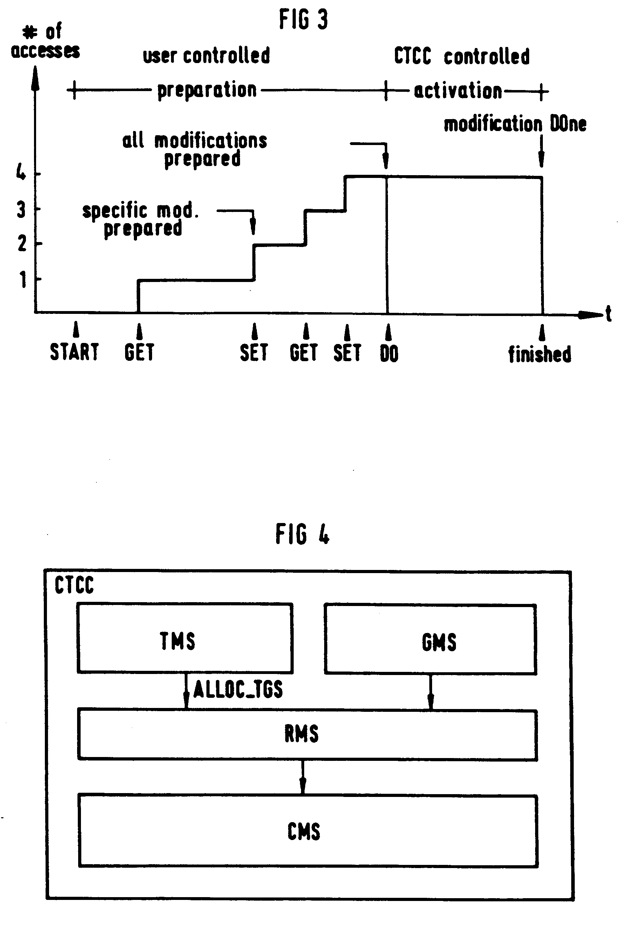

Fig. 3 zeigt die Phasen einer Transaktion. Eine Transaktion beinhaltet mindestens zwei Phasen, nämlich eine Vorbereitungsphase, die vom Anwender gesteuert wird, und eine Aktivierungsphase, die vom zentralen Zugriffssteuerungssystem gesteuert wird.

In der Vorbereitungsphase wird die Transaktion Schritt für Schritt aufgebaut, indem vom Anwender nacheinander die Zugriffsprozeduren (SET, GET, usw.) für Einzelzugriffe aufgerufen werden. Innerhalb einer Transaktion können grundsätzlich beliebig viele Einzelzugriffe durch Aufruf der entsprechenden Zugriffsprozeduren initiiert werden.

Die Vorbereitungsphase wird durch die Prozedur START_TA gestartet und durch die Prozedur DO_TA beendet. Die Prozedur START_TA ordnet der Transaktion eine Transaktionskennung TA_ID zu und übergibt sie dem Anwender. Der Anwender verwendet diese TA_ID dann als Eingangsparameter beim Aufruf der Zugriffsprozeduren für Einzelzugriffe.

In der Vorbereitungsphase werden die Aufrufe der Zugriffsprozeduren aufgezeichnet und eventuelle Änderungen der vom Zugriff betroffenen Daten vorbereitet. In der Vorbereitungsphase hat der Anwender die Möglichkeit, die Transaktion durch den Aufruf der Prozedur ABORT_TA zu verwerfen.

Durch den Aufruf der Prozedur DO_TA wird gleichzeitig die Aktivierungsphase gestartet, die ausschließlich vom Zugriffssteuerungssystem gesteuert wird und deshalb unabhängig von Anwenderaufrufen ablauft. In der Aktivierungsphase können somit keine weiteren Aufrufe für Einzelzugriffe berücksichtigt werden.

In der Vorbereitungsphase wird die Koordination einer Transaktion durchgeführt, d.h. alle Kollisionsfälle mit anderen parallel Transaktionen werden identifiziert und koordiniert. Die Koordinierung erfolgt dabei derart, daß solche Transaktionen, die früher gestartet wurden, fortgeführt werden dürfen, wogegen andere parallele Transaktionen zurückgewiesen werden, indem eine entsprechende negative Rückmeldung an den Anwender zurückgegeben wird. Da alle Kollisionsfälle somit in der Vorbereitungsphase gelöst werden, können Transaktionen in der Aktivierungsphase unabhängig voneinander durchgeführt werden.

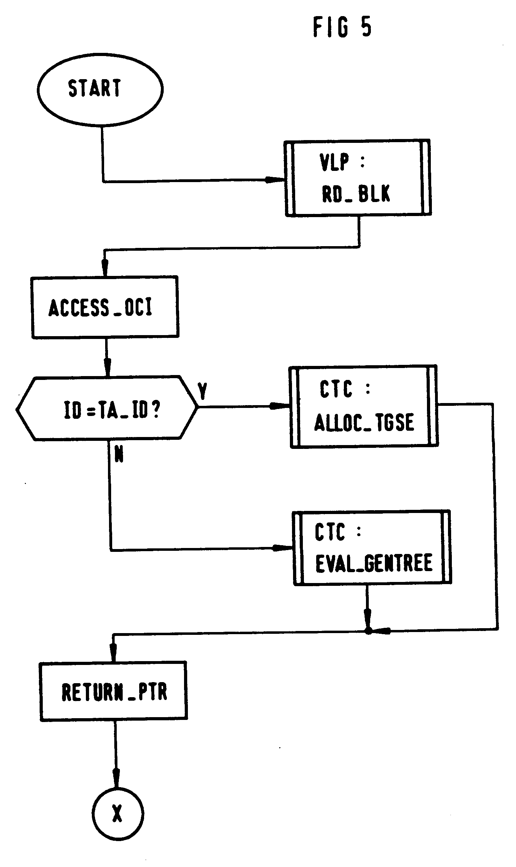

Fig. 4 zeigt die Struktur des zentralen Zugriffssteuerungssystems CTCC. Das zentrale Zugriffssteuerungssystem CTCC umfaßt ein Transaktions-Management-System TMS, ein Generationen-Management-System GMS, ein Resourcen-Management-System RMS und ein Kollisions-Management-System CMS.

Das Transaktions-Management-System TMS steuert den transaktionsorientierten Zugriff auf die Datenobjekte des Datenverwaltungssystems.

Das Generationen-Management-System GMS verwaltet die im Rahmen von Transaktionen erzeugten Datengenerationen anhand einer vom Transaktions-Management-System während der Aktivierungsphase einer Transaktion vergebenen Generationenkennung GEN_ID. Diese Verwaltung umfaßt das Aufdatieren einer neu erzeugten Datengeneration, d.h. das Transferieren der neuen Datengeneration auf ihre endgültigen Speicherplätze im Arbeitsspeicher und/oder auf der Disk. Darüber hinaus umfaßt die genannte Verwaltung die Steuerung von Lesesequenzen (Folgen von logisch zusammengehörigen Lesezugriffen auf die Datenobjekte des Datenverwaltungssystems).

Durch diese Art der Verwaltung wird es ermöglicht, daß eine Gruppe von Datenobjekten im Rahmen einer Lesesequenz konsistent (d.h. alle gelesenen Datenobjekte gehören derselben Generation an) gelesen werden kann, während parallel dazu eine Transaktion stattfindet.

Das Resourcen-Management-System RMS verwaltet Zugriffssteuerungs-Datenstrukturen, die vom Transaktions-Management-Systems und/oder des Generationen-Management-Systems zur Steuerung des Zugriffs verwendet werden.

Ein TGSE ist in Form einer SW-Weiche ausgestaltet, die einen ersten Ausgang zu dem alten Abbild und einen zweiten Ausgang zu dem neuen Abbild umfaßt und es so ermöglicht, das neue Abbild eines DOs parallel zu dem alten Abbild einzubringen.

Jedesmal wenn eine TA ein neues Abbild einbringen will, wird vom RMS ein TGSE angefordert und diese vom TMS dann in den Zugriffspfad eingefügt.

Das TGSE ermöglicht nicht nur das parallele Einbringen eines neuen Abbildes, sondern bietet, da sie Teil des Zugriffspfades wird, zusätzlich einen Schutzmechanismus in Form eines Sperrkennzeichens, über das eine Transaktion den Zugang zum Datenobjekt DO verschließen kann und somit unerlaubte Zugriffe seitens parallel arbeitender Transaktionen auf die neuen Abbilder zu verhindern.

Das Kollisions-Management-System CMS koordiniert schreibende Zugriffe auf ein und dasselbe Datenobjekt, die durch parallele Transaktionen ausgelöst werden und verhindert, daß die älteste Datengeneration gelöscht wird, während gleichzeitig eine Lesesequenz einen lesenden Zugriff auf Datenobjekte dieser Datengeneration durchführen will.

Im folgenden werden die bei einer Transaktion oder einer Lesesequenz zusammengefaßten Einzelaktionen bzw. genauer gesagt die Prozeduren zur Durchführung dieser Einzelaktionen anhand der Fig. 5, 6 und 7 näher erläutert.

Fig. 5 zeigt eine Prozedur GET, die in einem Anwendermodul enthalten ist und eine einzelne Leseaktion durchführt, wobei sie sowohl im Rahmen einer Transaktion, als auch im Rahmen einer Lesesequenz aufgerufen werden kann. Eingangsparameter der Prozedur GET sind eine Kennung der Leseaktion und ein logischer Key, der durch den Datenzugriffspfad zum Datenobjekt führt. Bei der Kennung der Transaktion handelt es sich um eine Transaktionskennung TA_ID, wenn die Prozedur GET innerhalb einer Transaktion verwendet wird. Im anderen Fall, nämlich wenn die Prozedur GET innerhalb einer Lesesequenz verwendet wird, handelt es sich bei der Kennung um eine Generationenkennung GEN_ID. Ausgangsparameter der Prozedur GET sind das Datenobjekt sowie ein Meldungsparameter zur Rückgabe von Kontrollmeldungen.

Zunächst wird anhand des logischen Keys über Listen der Datenzugriffspfad durchlaufen.

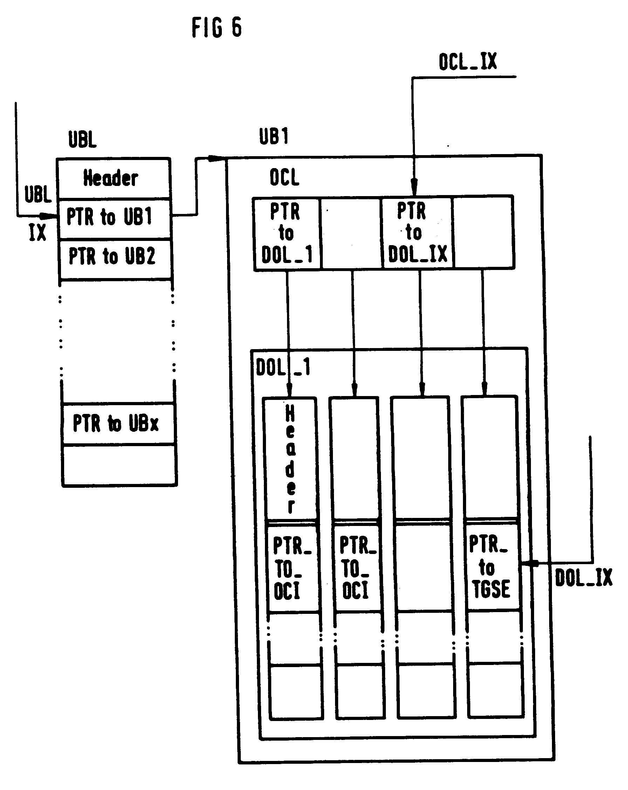

Fig. 6 zeigt die beispielhafte Struktur eines Datenzugriffspfads, der mehrere Listen umfaßt und im anwenderunabhängigen Datenmodul VLP abgespeichert ist. Der Datenzugriffspfad umfaßt eine Datenblockliste UBL, deren Listenelemente Zeiger auf Datenblöcke UB darstellen, sowie innerhalb eines Datenblocks UB eine Objektklassenliste OCL und Datenobjektlisten DOL . Der logische Key umfaßt Indexe der genannten Listen, nämlich die Indexe UBL_IX, OCL_IX und DOL_IX, anhand derer schließlich der Zeiger auf ein Datenobjekt bzw. eine Zugriffssteuerungs-Datenstruktur TGSE ermittelt werden kann.

Zunächst durchläuft die Prozedur GET den Datenzugriffspfad, indem sie die Prozedur RD_BLK aufruft, die im anwenderunabhängigen zentralen Datenpool VLP implementiert ist. Diese Prozedur liefert als Rückgabewert den physikalischen Zeiger auf eine Datenobjektsliste DOL. Im Falle einer Transaktion wird dieser Zeiger erst in der auf die Vorbereitungsphase der Transaktion folgenden Aktivierungsphase benutzt, um den eigentlichen Zugriff auszuführen.

Als nächstes wird die Prozedur ACCESS_OCI mit den Parametern "Zeiger auf die Datenobjektliste DOL" und "DOL_IX" aufgerufen. Diese Prozedur untersucht u.a. den Header der DOL und ermittelt, ob es sich bei dem übergebenen Parameter "DOL_IX" um einen gültigen Index handelt.

Ist der Index DOL_IX gültig, dann wird anschließend das dem Index DOL_IX entsprechende Listenfeld der Liste DOL analysiert. Dabei wird untersucht, ob es sich bei der im Zugangsfeld (Verschlußfeld) des Listenfeldes abgespeicherten Kennung ID um eine Transaktionskennung oder eine Generationenkennung handelt. Dies ist in Fig. 5 durch einen Verzweigungsblock dargestellt.

Falls es sich um eine Generationenkennung handelt, wird anhand der Prozedur EVAL_GENTREE der sich an den Datenzugriffspfad anschließende Generationenbaum ausgewertet und daraufhin der der Generationenkennung entsprechende physikalische Zeiger auf das Datenobjekt zurückgegeben.

Falls es sich bei der Kennung ID um eine Transaktionskennung handelt, wird die Prozedur ALLOC_TGSE aufgerufen, die eine darauffolgende Schreibaktion durch eine Prozedur SET vorbereitet, und das Datenobjekt gegenüber anderen Transaktionen verschlossen.

Ein anwenderspezifisches Datenmodule GMI umfaßt desweiteren eine Prozedur SET, die ein Datenobjekt innerhalb einer Transaktion modifiziert. Eingangsparameter dieser Prozedur sind eine Transaktionskennung TA_ID, ein logischer Key zur Führung durch den Datenzugriffspfad und ein Zeiger zu den neu übernehmenden Daten sowie eine Längenangabe der neuen Daten. Ausgangsparameter ist ein Parameter für Rückmeldungen.

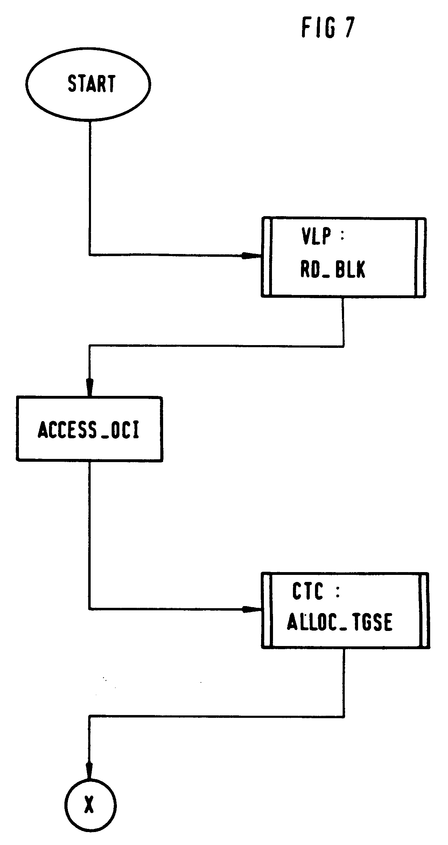

FIG 7 zeigt eine Prozedur SET, die wie die Prozedur GET den Datenzugang, der mit Hilfe der Prozeduren RD_BLK und ACCESS_OCI durchgeführt wird, umfaßt. Nach durchgeführtem Datenzugang ruft die Prozedur SET die im CTCC enthaltene Prozedur ALLOC_TGSE auf, die eine neue Zugriffssteuerungs-Datenstruktur TGSE anfordert und die neuen Daten bzw. das neue Datenobjekt in die Weichenstruktur kopiert. Falls die Prozedur SET durch die Prozedur GET vorbereitet wurde, entfällt die genannte Zuordnung einer neuen Zugriffssteuerungs-Datenstruktur.

Die anwenderspezifischen Datenmodule umfassen desweiteren eine Prozedur CREATE, die eine Objektklasse um ein Datenobjekt erweitert und eine Prozedur DELETE, die eine Objektklasse um ein Datenobjekt verringert. Die beiden genannten Prozeduren sind für die Beschreibung der Erfindung ohne Bedeutung und werden deshalb nicht näher erläutert.

## Patentansprüche

1. Datenverwaltungssystem mit
a) einem generischen Datenbasissystem (GDB), das ein zentrales Steuerungssystem (CU) und mindestens ein generisches Datenmodul (GM) umfaßt,
b) einem zentralen Zugriffssteuerungssystem (CTCC), das im zentralen Steuerungssystem (CU) enthalten ist und Zugriffe auf Anwenderdaten (DATA) auf zentraler Ebene steuert,
c) einem lokalen Zugriffssteuerungssystem (CTCL), das in einem generischen Datenmodul (GM) enthalten ist, und das Zugriffe auf Anwenderdaten auf lokaler Ebene steuert, wobei es dabei mit dem zentralen Zugriffssteuerungssystem (CTCC) entsprechend zusammenarbeitet,
d) einem anwenderspezifischen Datenbasissystem (ADB), das mindestens ein anwenderspezifisches Datenmodul (GMI) umfaßt, wobei ein anwenderspezifisches Datenmodul durch Aufprägen von anwenderspezifischen Datentypen aus einem generischen Datenmodul erzeugt ist, und das mindestens eine Anwenderzugriffsprozedur (V_GET, V_SET, START_TA DO_TA) umfaßt, die vom Datenverwaltungssystem exportiert wird, und die die einzige Schnittstelle eines Anwendersystems zum Datenverwaltungssystem darstellt.

2. Datenverwaltungssystem nach Anspruch 1,
**dadurch gekennzeichnet**,
daß eine Anwenderzugriffsprozedur aus einer Kombination von Standardzugriffsprozeduren (GET, SET, CREATE, DELETE) aufgebaut ist, wobei die Standardzugriffsprozeduren in den jeweiligen lokalen Zugriffssteuerungssystemen (CTCL) enthalten sind und Schnittstellen zum zentralen Zugriffsteuerungssystem (CTCC) enthalten.

3. Datenverwaltungssystem nach einem der Ansprüche 1 oder 2,
**dadurch gekennzeichnet**,
daß das Datenverwaltungssystem ein Sicherungssystem (NVSI) umfaßt, das die Schnittstelle zu einem Hintergrundspeicher zur Sicherung der Anwenderdaten realisiert, und das ausschließlich vom Zugriffssteuerungssystem (CTCC, CTCL) aufgerufen wird.

4. Datenverwaltungssystem nach einem der Ansprüche 1 bis 3,
**dadurch gekennzeichnet**,
daß das Datenverwaltungssystem ein Verteilungssystem (DDFC, DDFL) umfaßt, das aufgrund von Anwenderzugriffen aktualisierte Anwenderdaten (DATA) auf die verschiedenen Prozessoren des Realzeitsystems verteilt, und das ausschließlich vom Zugriffssteuerungssystem (CTCC, CTCL) aufgerufen wird.

## Claims

1. Data management system having
a) a generic database system (GDB), which comprises a central control system (CU) and at least one generic data module (GM),
b) a central access control system (CTCC), which is contained in the central control system (CU) and controls accesses to user data (DATA) on a central level,
c) a local access control system (CTCL), which is contained in a generic data module (GM), and which controls accesses to user data on a local level, it thereby cooperating correspondingly with the central access control system (CTCC),
d) a user-specific database system (ADB), which comprises at least one user-specific data module (GMI), a user-specific data module being produced by defining user-specific data types from a generic data module, and which comprises at least one user access procedure (V_GET, V_SET, START_TA, DO_TA), which is exported from the data management system, and which represents the individual interface of a user system to the data management system.

2. Data management system according to Claim 1, characterized in that a user access procedure is built up from a combination of standard access procedures (GET, SET, CREATE, DELETE), the standard access procedures being contained in the respective local access control systems (CTLC) and containing interfaces to the central access control system (CTCC).

3. Data management system according to one of Claims 1 or 2, characterized in that the data management system comprises a saving system (NVSI), which realizes the interface to a backing store for saving the user data, and which is called up exclusively from the access control system (CTCC, CTCL).

4. Data management system according to one of Claims 1 to 3, characterized in that the data management system comprises a distribution system (DDFC, DDFL), which distributes updated user data (DATA) to the various processors of the real-time system on the basis of user accesses, and which is called up exclusively from the access control system (CTCC, CTCL).

## Revendications

1. Système de gestion de base de données avec
a) un système générique de base de données (GDB), qui comprend un système central de commande (CU) et, au moins, un module générique de données (GM),
b) un système central de commande d'accès (CTCC), qui est contenu dans le système central de commande (CU) et qui commande, sur un plan central, des accès sur les données d'utilisateur (DATA),
c) un système local de commande d'accès (CTCL), qui est contenu dans un module générique de données (GM) et qui commande, sur un plan local, des accès sur les données d'utilisateur, ce système travaillant d'une façon correspondante avec le système central de commande d'accès (CTCC),
d) un système de base de données (ADB), spécifique à l'utilisateur, qui comprend au moins un module de données (GMI) spécifique à l'utilisateur, un module de données spécifique à l'utilisateur étant généré, à partir d'un module générique de données, en imposant des types de données spécifiques à l'utilisateur, et qui comprend au moins une procédure d'accès d'utilisateur (V_GET, V_SET, START_TA, DO_TA), laquelle est exportée par le système de gestion de base de données et laquelle représente la seule interface d'un système d'utilisateur avec le système de gestion de base de données.

2. Système de gestion de base de données selon la revendication 1
**caractérisé par le fait**
qu'une procédure d'accès d'utilisateur est édifiée à partir d'une combinaison de procédures standard d'accès (GET, SET, CREATE, DELETE), les procédures standard d'accès étant comprises dans les systèmes locaux de commande d'accès (CTCL) et comprenant des interfaces vers le système central de commande d'accès (CTCC).

3. Système de gestion de base de données selon l'une des revendications 1 ou 2
**caractérisé par le fait**
que le système de gestion de base de données comprend un système de sauvegarde (NVSI) qui réalise l'interface vers une mémoire en arrière-plan pour la sauvegarde des données d'utilisateur et qui est exclusivement appelé par le système de commande des accès (CTCC, CTCL).

4. Système de gestion de base de données selon l'une des revendications 1 à 3
**caractérisé par le fait**
que le système de gestion de base de données comprend un système de distribution (DDFC, DDFL) qui répartit, en raison d'accès d'utilisateurs, des données d'utilisateur actualisées (DATA) sur les différents processeurs du système à temps réel et qui est exclusivement appelé par le système de commande des accès (CTCC, CTCL).
